# EUROPEAN PATENT SPECIFICATION

(11) **EP 4 278 579 B1**
(45) Date of publication and mention of the grant of the patent: **22.07.2026**
(21) Application number: 21773360.9
(22) Date of filing: 07.09.2021
(51) Int. Cl.: H04L 12/12, H04L 12/40, H04L 41/0668, H04L 69/14

(54) **COMMUNICATION INTERFACE AND METHOD FOR SEAMLESS ASYMMETRIC COMMUNICATION OVER MULTILANE COMMUNICATION LINK**
KOMMUNIKATIONSSCHNITTSTELLE UND VERFAHREN FÜR NAHTLOSE ASYMMETRISCHE KOMMUNIKATION ÜBER EINE MEHRSPURIGE KOMMUNIKATIONSVERBINDUNG
INTERFACE DE COMMUNICATION ET PROCÉDÉ DE COMMUNICATION ASYMÉTRIQUE CONTINUE SUR UNE LIAISON DE COMMUNICATION À VOIES MULTIPLES

(43) Date of publication of application: 22.11.2023
(73) Proprietor: Huawei Technologies Co., Ltd., Shenzhen, Guangdong 518129 (CN)
(72) Inventor: PANDEY, Sujan, 80992 Munich (DE)
(74) Representative: Gill Jennings & Every LLP
(86) International application number: PCT/EP2021/074555
(87) International publication number: WO 2023/036396

(56) References cited:
- US-A1- 2010 162 033
- US-A1- 2012 066 531
- MASASHI KONO ET AL: "A 400-Gb/s and Low-Power Physical-Layer Architecture for Next-Generation Ethernet", ICC 2011 - 2011 IEEE INTERNATIONAL CONFERENCE ON COMMUNICATIONS - 5-9 JUNE 2011 - KYOTO, JAPAN, IEEE, PISCATAWAY, NJ, USA, 5 June 2011 (2011-06-05), pages 1 - 6, XP031908504, ISBN: 978-1-61284-232-5, DOI: 10.1109/ICC.2011.5962750

## Description

### TECHNICAL FIELD

The present disclosure relates generally to the field of data communication and more specifically, to a communication interface for use at both ends of a communication link, a communication network including the communication interface, and a method of seamless data communication over a multilane communication link.

### BACKGROUND

Generally, autonomous vehicles require a high-speed (e.g., multi-gigabit) data communication link in order to transfer data from various sensors (e.g., camera1, camera2, RADAR, and the like) to a central processing unit (CPU). Typically, an in-vehicle network is used to communicate data among various sensors (or nodes) and from the sensors to the CPU. Conventionally, a high-speed automotive Ethernet standard is used for the multi-gigabit data communication among the sensors as well as from the sensors to the CPU. The conventional high-speed automotive Ethernet standard employs a single twisted pair cable. However, the single twisted pair cable has its own physical limit with respect to bandwidth. By virtue of the physical limit of the single twisted pair cable, the single twisted pair cable is not preferably used for the multi-gigabit data communication. The multi-gigabit data communication deals with a high data rate that is beyond 25 gigabits per second (Gbit/s). Therefore, there is a requirement for multilane technology that can deliver multiples of gigabit as a backbone for communication with the autonomous vehicles. In the autonomous vehicles, the multilane technology (or the multi-gigabit communication technology) is related to safety. If any one lane of the multilane technology is broken then, entire communication link will stop working. Moreover, the lane failure may further result in undesirable consequences. In the typical in-vehicle network, multiple cables are used in order to connect various sensors with each other as well as to the CPU. The use of the multiple cables results in cable congestion, and also, the cables contribute a quite some portion of the total weight of the typical autonomous vehicle. Therefore, in order to reduce the cable congestion, multiple sensors are aggregated in a typical switch. A multi-gigabit communication link is established between various typical switches which acts as a backbone of the typical in-vehicle network communication. In one case, if any one lane of the multi-gigabit communication link is turned into a failure, then, in such a case, there will be no communication at all.

Currently, certain attempts have been made in order to maintain the communication between various typical switches in case of a lane failure, such as a conventional method is based on using huge buffers on a physical (PHY) layer(s). However, the conventional method results in an additional latency to the overall communication. Furthermore, the conventional method describes that the coding is done and the received data is aligned at the receiver, but the method does not provide any detail on how the coding is done without affecting the hardware and performance. Thus, a communication link drop in case of any lane failure, resulting in no communication or a flawed and unreliable communication between various typical switches of the typical in-vehicle network. Therefore, there exists a technical problem of how to perform a seamless transmission of data between various typical switches of the typical in-vehicle network during link failure and without affecting the overall performance of the typical in-vehicle network.

Therefore, in light of the foregoing discussion, there exists a need to overcome the aforementioned drawbacks associated with the conventional communication link.

The paper MASASHI KONO ET AL: "A 400-Gb/s and Low-Power Physical-Layer Architecture for Next-Generation Ethernet", XP031908504, is a proposal for a power-saving high-speed multi-lane capable Ethernet PHY interface.

### SUMMARY

The present disclosure provides a communication interface for use at both ends of a communication link. The present disclosure further provides a communication network with the communication interface and a method of seamless data communication over a multilane communication link. The present disclosure provides a solution to the existing problem of how to perform a seamless transmission of data between various typical switches of the typical in-vehicle network during link failure and without affecting an overall performance of the typical in-vehicle network. An objective of the present disclosure is to provide a solution that overcomes at least partially the problems encountered in the prior art and provides an improved communication interface that provides seamless data communication at both ends of a communication link, even in case of a lane failure. The present disclosure further provides a communication network with an improved communication interface that manifests a flawless and reliable communication, even in case of a lane failure, and a method of seamless data communication over a multilane communication link.

One or more objectives of the present disclosure is achieved by the solutions provided in the enclosed independent claims. Advantageous implementations of the present disclosure are further defined in the dependent claims.

In one aspect, the present disclosure provides a communication interface for use at a first end of a communication link comprising a number of communication lanes greater or equal to two. The communication interface further comprises a logic configured to cooperate with other communication interface at a second end of the communication link to send data to the second end over one awake communication lane amongst the said communication lanes. At least one asleep communication lane amongst the said communication lanes being in a sleep mode in which it cannot send any data, the logic is further configured to: store a communication lane status for the said awake communication lane, and when detecting that the communication lane status for the said awake communication lane has changed to a first determined status. The logic is further configured to stop sending data over the awake communication lane, change the asleep communication lane into a new awake communication lane, inform the communication interface at the second end that the new awake communication lane will be used to send data, and send data to the second end over the new awake communication lane.

The disclosed communication interface provides seamless data communication between the first end and the second end of the communication link, even in case of a lane failure. Additionally, the logic at the communication interface is configured for early detection of the first determined status of a communication lane amongst the said communication lanes and accordingly communicate each of the communication interfaces at the first end and the second end of the communication link about the communication lane with the first determined status and maintain the data communication seamlessly by use of the other communication lanes. The communication interface at the first end is configured to transmit the data to the other communication interface at the second end with a full data rate and with an improved bandwidth by making all the communication lanes in an operation mode. Moreover, the other communication interface at the second end is configured to transmit the data to the communication interface at the first end with a low data rate, and hence, there is no need to operate all the communication lanes simultaneously. Instead, merely one communication lane is sufficient to transmit the data from the second end resulting in reduced power consumption and more energy efficiency. Therefore, one communication lane is used as the awake communication lane, and remaining communication lanes are configured to stay in sleep mode in order to save energy. If the awake communication lane turned in a lane failure, then one of the communication lanes which are set in sleep mode is changed into the new awake communication lane for data communication. Thus, there will be a seamless transmission of data from the communication interface to the other communication interface. Moreover, as long as there exists at least one awake communication lane (i.e., one fault-free communication lane), the transmission of data takes place seamlessly between the first end to the second end.

In an implementation form, the communication interface further comprises, for each given communication lane amongst all the awake communication lanes and all the asleep communication lanes, a buffer configured to receive data to be transmitted, over the given communication lane, to a corresponding buffer in the communication interface at the second end, and a gate configured to open or close the input in the buffer of data to be transmitted over the given communication lane, to the corresponding buffer in the communication interface at the second end, the logic being configured to control the gate depending on the communication lane status of the given communication lane.

By virtue of using the buffer and the gate corresponding to each communication lane, a reliable and high-speed data communication is obtained between both ends of the communication link.

In a further implementation form, the buffer is configured to receive data transmitted over the given communication lane from the corresponding buffer in the other communication interface at the second end, and the gate is configured to open or close the output of data received over the given communication lane, the logic being configured to control the gate depending on the communication lane status of the given communication lane.

The logic is further configured to split a data frame into a number of subframes corresponding to the number of awake communication lanes, the data to be transmitted over the awake communication lanes being one of said subframes.

By virtue of splitting the data frame into the number of subframes, a high-speed data communication can be obtained.

In a further implementation form, the data to be transmitted over the awake communication lanes is a control message containing a control information to be used for controlling the working of a device located at the second end and connected to the other communication interface at said second end.

By virtue of using the control message, the device located at the second end can be configured either for maintenance or repair mode.

In a further implementation form, the logic is further configured, when detecting that the communication lane status for the said awake communication lane has changed to a second determined status, to change the asleep communication lane into a new awake communication lane, inform the communication interface at the second end that the new awake communication lane will be used to send data, send data to the second end over the awake communication lane and over the new awake communication lane.

By virtue of sending the data to the second end over the awake communication lane and over the new awake communication lane, there will be a seamless data transmission from the communication interface to the other communication interface.

In another aspect, the present disclosure provides a communication network comprising a first node at a first end of a communication link and second node at a second end of the communication link, said communication link comprising a number of communication lanes greater or equal to two, the first and the second nodes each comprising the communication interface.

The communication network provides a seamless data communication between the first node and the second node, even in case of a lane failure of the number of the lanes of the communication link between the first node and the second node. The seamless data communication is obtained by virtue of comprising the disclosed communication interface at each of the first node and the second node.

In an implementation form, the communication network is an in-vehicle communication network.

The in-vehicle communication network manifests multi-gigabit communication as well as seamless data communication in spite of a lane failure.

In yet another aspect, the present disclosure provides a method of communication over a communication link comprising a number of communication lanes greater or equal to two and having a first end and a second end. The method comprises sending data from the first end to second end over one awake communication lane amongst the said communication lanes, at least one asleep communication lane amongst the said communication lanes being in a sleep mode in which it cannot send any data. The method further comprising: storing, at the first end, a communication lane status for the said awake communication lane, and detecting, at the first end, that the communication lane status for the said awake communication lane has changed to a first determined status, and when detecting, at the first end, that the communication lane status for the said awake communication lane has changed to the determined status: stopping sending data over the awake communication lane, changing the asleep communication lane into a new awake communication lane, informing the other communication interface at the second end that the new awake communication lane will be used to send data, sending data to the second end over the new awake communication lane.

The method achieves all the advantages and technical effects of the communication interface of the present disclosure.

It is to be appreciated that all the aforementioned implementation forms can be combined.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

Additional aspects, advantages, features and objects of the present disclosure would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is a network diagram that illustrates seamless data communication between a first node placed at a first end of a communication link and a second node placed at a second end of the communication link, in accordance with an embodiment of the present disclosure;
FIG. 2A illustrates communication between various sub-blocks associated with communication interfaces of a first end and a second end, in accordance with an embodiment of the present disclosure;
FIG. 2B illustrates communication between various sub-blocks associated with communication interfaces of a second end and a first end, in accordance with another embodiment of the present disclosure;
FIG. 2C illustrates communication between various sub-blocks associated with communication interfaces of a first end and a second end, in accordance with yet another embodiment of the present disclosure;
FIG. 3 is a sequence diagram that depicts an interaction process between two physical health registers, in accordance with an embodiment of the present disclosure; and
FIG. 4 is a flowchart of a method of communication over a communication link comprising a number of communication lanes, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

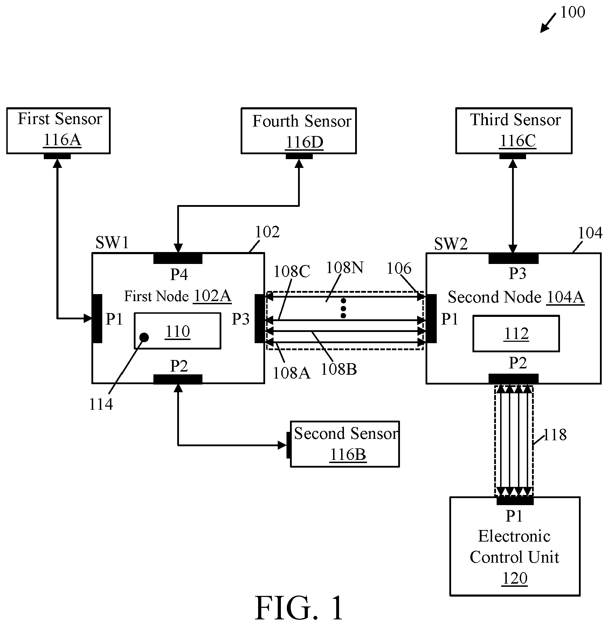

FIG. 1 is a network diagram that illustrates seamless data communication between a first node placed at a first end of a communication link and a second node placed at a second end of the communication link, in accordance with an embodiment of the present disclosure. With reference to FIG. 1, there is shown a communication network **100** that includes a first node **102A** and a second node **104A.** The first node **102A** is located at a first end **102** of a communication link **106,** and the second node **104A** is located at a second end **104** of the communication link **106.** The communication link **106** includes a number of communication lanes **108A-108N,** which is either greater or equal to two in number. The first node **102A** includes a communication interface **110** and the second node **104A** includes another communication interface **112.** There is further shown a logic **114,** a plurality of sensors, such as a first sensor **116A,** a second sensor **116B,** a third sensor **116C,** and a fourth sensor **116D,** connected to the first node **102A** and the second node **104A.** Furthermore, there is a communication link **118** between the second node **104A** and an electronic control unit **120.**

The communication network **100** provides a seamless data communication between the first node **102A** and the second node **104A.** The communication network **100** maintains the communication between the first node **102A** and the second node **104A,** even in case of a lane failure of the number of the communication lanes **108A-108N** of the communication link **106.** Conventionally, if any one lane of the number of lanes is turned into a failure, then there was no communication among typical nodes of a typical communication network. In spite of the lane failure, the communication network **100** of the present disclosure provides a communication between the first node **102A** and the second node **104A** with an improved bandwidth. In an implementation, the communication network **100** is an in-vehicle communication network. The communication network **100** includes a medium (either wired or wireless or optical) through which the various control units, or components, such as the first node **102A** with the communication interface **110,** the second node **104A** with the other communication interface **112,** the plurality of sensors, the electronic control unit **120** communicate with each other. Examples of the wired and wireless communication protocols for the communication network **100** may include, but are not limited to, a vehicle area network (VAN), a CAN bus, Domestic Digital Bus (D2B), Time-Triggered Protocol (TTP), FlexRay, IEEE 1394, Inter-Integrated Circuit (I2C), Inter Equipment Bus (IEBus), Society of Automotive Engineers (SAE) J1708, SAE J1939, International Organization for Standardization (ISO) 11992, ISO 11783, Media Oriented Systems Transport (MOST), MOST25, MOST50, MOST150, Plastic optical fiber (POF), Power-line communication (PLC), Serial Peripheral Interface (SPI) bus, and/or Local Interconnect Network (LIN).

Each of the first node **102A** and the second node **104A** corresponds to a switch. For example, the first node **102A** may also be referred to as a first switch (also represented as SW1), and the second node **104A** may also be referred to as a second switch (also represented as SW2). Anther examples of the first node **102A** and the second node **104A** may include but are not limited to a router, a transmitter, a receiver, a transmitting device, a receiving device, a transceiver, and the like.

Each of the first node **102A** and the second node **104A** are located at the first end **102** and the second end **104** of the communication link **106,** respectively. The communication link **106** is a full-duplex link. This means that each of the first node **102A** and the second node **104A** can be configured for simultaneously transmitting and receiving data over the communication link **106.** Moreover, the communication link **106** between the first node **102A** and the second node **104A** can be either wired or wireless, or optical in nature, depending on a use case. The communication link **106** between the first node **102A** and the second node **104A** is a multilane communication link, hence, the communication link **106** can provide a data rate of either 25Giga(G)bits/s, 50Gbits/s, 100Gbits/s or beyond 100Gbits/s. In the communication network **100,** the communication link **106** includes N-number of communication lanes **108A-108N.** Moreover, the communication network **100** provides a data rate of 100Gbits/s over the communication link **106.** However, in another implementation, the number of communication lanes **108A-108N** may range up to N number of lanes. Examples of the communication link **106** may include, but are not limited to, a Wireless Fidelity (Wi-Fi) communication link, a Local Area Network (LAN) communication link, a wireless personal area network (WPAN) communication link, a Wireless Local Area Network (WLAN) communication link, a wireless wide area network (WWAN) communication link, a cloud network communication link, a Long-Term Evolution (LTE) network communication link, a Metropolitan Area Network (MAN) communication link, and/or the Internet.

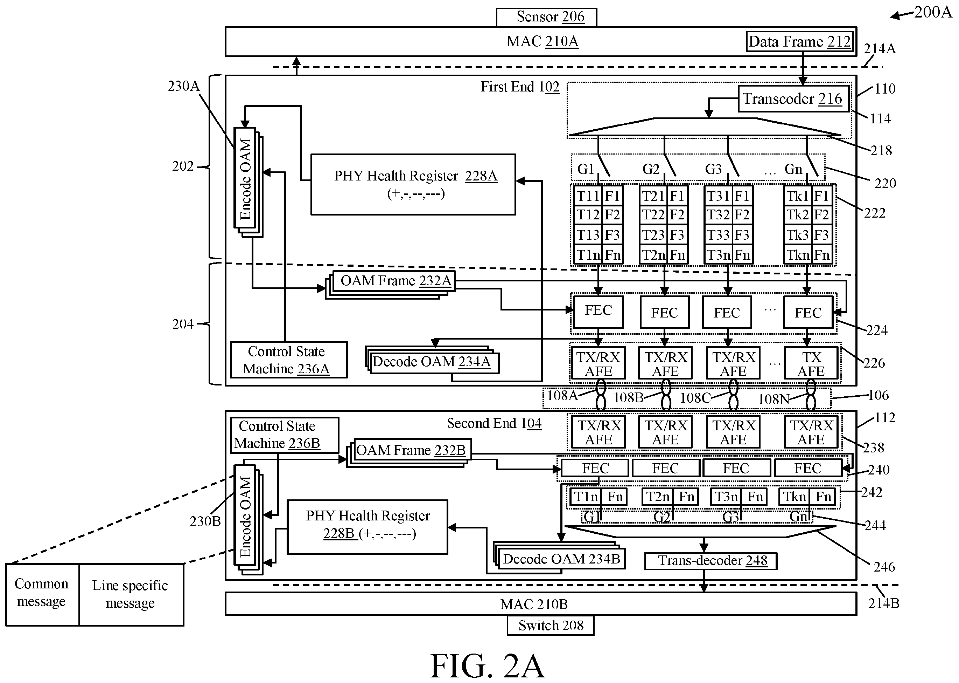

The first node **102A** and the second node **104A** include the communication interface **110** and the other communication interface **112,** respectively. The communication interface **110** at the first node **102A** is configured to cooperate with the other communication interface **112** at the second node **104A** in order to send a data frame over the communication link **106,** described in detail, for example, in FIG. 2A. Examples of each of the communication interface **110** and the other communication interface **112** may include, but are not limited to, an antenna, a telematics unit, a radio frequency (RF) transceiver, one or more amplifiers, one or more oscillators, a digital signal processor, a coder-decoder (CODEC) chipset, and/or a subscriber identity module (SIM) card.

The communication interface **110** includes the logic **114** that is configured to cooperate with the other communication interface **112** at a second end **104** of the communication link **106.** In an example, the logic **114** corresponds to a combination of a transcoder and a de-multiplexer. Examples of the logic **114** may include, but are not limited to, a microcontroller, a microprocessor, a central processing unit (CPU), a complex instruction set computing (CISC) processor, an application-specific integrated circuit (ASIC) processor, a reduced instruction set (RISC) processor, a very long instruction word (VLIW) processor, a data processing unit, and other processors or control circuitry.

In the communication network **100,** each of the first sensor **116A,** the second sensor **116B,** and the fourth sensor **116D** is connected to the first node **102A,** and the third sensor **116C** is connected to the second node **104A.** Each of the first sensor **116A,** the second sensor **116B,** the third sensor **116C,** and the fourth sensor **116D** is connected at physical layer(s) of the first node **102A** and the second node **104A.** For example, each of the first sensor **116A,** the second sensor **116B,** and the fourth sensor **116D** is connected at physical layers (represented by P1, P2, and P4, respectively) of the first node **102A,** and each connection provides a data rate of 25Gbits/s. Similarly, the third sensor **116C** is connected at the physical layer (also represented by P3) of the second node **104A** and provides a data rate of 25Gbits/s. The first node **102A** and the second node **104A** are connected with each other through the communication link **106** between physical layers (P3, P1) of the first node **102A** and the second node **104A,** respectively. Examples of each of the first sensor **116A,** the second sensor **116B,** the third sensor **116C,** and the fourth sensor **116D** may include, but are not limited to, a camera, radio detection and ranging (RADAR), light detection, and ranging (LiDAR), global navigation satellite system (GNSS) receiver, dash-cam, and the like.

The communication link **118** between the second node **104A** and the electronic control unit **120** corresponds to the communication link **106** between the first node **102A** and the second node **104A.** The electronic control unit **120** includes suitable logic, circuitry, interfaces, and/or code that is configured to monitor and optimize the performance of the plurality of sensors depending on the data received from the first node **102A** and the second node **104A.**

In one aspect, the present disclosure provides a communication network **100** comprising a first node **102A** at a first end **102** of a communication link **106** and second node **104A** at a second end **104** of the communication link **106,** said communication link **106** comprising a number of communication lanes **108A-108N** greater or equal to two, the first end **102** and the second node **104A** each comprising the communication interface **110.** The communication network **100** provides a seamless data communication between the first node **102A** and the second node **104A.** The communication network **100** maintains the seamless data communication between the first node **102A** and the second node **104A,** even in case of a lane failure of the number of the communication lanes **108A-108N** of the communication link **106.** In spite of the lane failure, the communication network **100** provides the seamless data communication between the first node **102A** and the second node **104A** at a partially reduced data rate in the asymmetric mode of communication in the multilane system.

In accordance with an embodiment, the said communication network **100** is an in-vehicle communication network. Therefore, the communication network **100** is useful for communication between various switches of the in-vehicle network. The in-vehicle communication network manifests multi-gigabit communication as well as seamless data communication in spite of a lane failure.

FIG. 2A illustrates communication between various sub-blocks associated with communication interfaces of a first end and a second end, in accordance with an embodiment of the present disclosure. FIG. 2A is described in conjunction with elements from FIG. 1. With reference to FIG. 2A, there is shown a circuit architecture **200A** that illustrates communication between various sub-blocks associated with the communication interface **110** of the first node **102A** and the other communication interface **112** of the second node **104A** of the communication network **100** (of FIG. 1). The circuit architecture **200A** illustrates that the communication interface **110** is configured for use at the first end **102** of the communication link **106,** and the other communication interface **112** is configured for use at the second end **104** of the communication link **106.** The communication link **106** includes N-number of communication lanes **108A-108N.** There is further shown a sensor **206,** a switch **208,** a medium access control (MAC) layer **210A,** a data frame **212,** a medium independent interface (MII) layer **214A,** another medium access control (MAC) layer **210B,** and another medium independent interface (MII) layer **214B.**

The communication interface **110** includes a physical coding sublayer (PCS) **202** and a physical medium attachment (PMA) **204.** The PCS **202** at the communication interface **110** includes a transcoder **216,** a de-multiplexer **218** with a number of gates **220** (also represented as G₁, G₂, G₃, ..., Gₙ), number of buffers **222,** and an encode operation, administration, and management (OAM) block **230A.** There is further shown a physical health register **228A,** which is accessible to both the PCS **202** and the PMA **204.** The PMA **204** at the communication interface **110** includes a number of forward error correction (FEC) blocks **224,** a number of transmitter/receivers analog front ends (TX/RX-AFE) **226,** an OAM frame **232A,** a decode OAM block **234A,** and a control state machine **236A.**

Similarly, the other communication interface **112** also includes a physical coding sublayer (not shown in FIG. 2A), and a physical medium attachment (not shown in FIG. 2A). The other communication interface **112** includes a physical health register **228B,** which is accessible to both the PCS and the PMA of the other communication interface **112.** There is further shown an encode OAM block **230A,** an OAM frame **232B,** a decode OAM block **234B,** and a control state machine **236B.** The other communication interface **112** further includes a number of transmitter/receivers analog front ends (TX/RX-AFE) **238,** a number of forward error correction (FEC) blocks **240,** a number of buffers **242,** a number of gates **244,** a multiplexer **246,** and a trans-decoder **248.**

Each of the number of gates **220,** the number of buffers **222** at the PCS **202** of the communication interface **110** and the number of gates **244,** the number of buffers **242** at the PCS of the other communication interface **112** are represented by a dashed box, which is used for illustration purpose only and does not form a part of the circuitry. Similarly, each of the number of FEC blocks **224,** the number of TX/RX-AFE **226** at the PMA **204** of the communication interface **110,** and the number of TX/RX-AFE **238,** and the number of FEC blocks **240,** at the PMA of the other communication interface **112** are also represented by a dashed box, which is used for illustration purpose only, and does not form a part of the circuitry.

As shown in FIG.2A, the sensor **206** is configured to send the data to the switch **208,** which is also referred to as an up-link communication of the data. The data communication from the sensor **206** to the switch **208** requires a full data rate given the high bandwidth requirement. Therefore, each of the number of communication lanes **108A-108N** is used as an awake communication lane. Moreover, each of the number of TX/RX-AFE **226** of the communication interface **110** and the number of TX/RX-AFE **238** of the other communication interface **112** can be used as a transmitter as well as a receiver depending on a use case. Therefore, each of the communication interface **110** and the other communication interface **112** can be configured to function as a transmitter as well as a receiver or, better to say, as a transceiver. Hence, the communication interface **110** (or a transceiver) is able to transmit the data frame **212** to the other communication interface **112** as well as receive the data frame **212** (or any other data frame) from the other communication interface **112.**

The present disclosure provides the communication interface **110** for use at the first end **102** of the communication link **106** comprising the number of communication lanes **108A-108N** greater or equal to two. The communication interface **110** comprises the logic **114** configured to cooperate with the other communication interface **112** at the second end **104** of the communication link **106** to send data to the second end **104** over one awake communication lane amongst the said communication lanes **108A-108N.** The communication interface **110** further comprises at least one asleep communication lane amongst the said communication lanes **108A-108N** being in a sleep mode in which it cannot send any data. In other words, the communication link **106** includes the first end **102** and the second end **104,** such as the communication interface **110** is arranged at the first end **102,** and the other communication interface **112** is arranged at the second end **104** of the communication link **106.** The communication link **106** includes the number of communication lanes **108A-108N** that are used to send the data from the first end **102** to the second end **104,** and vice versa. In an implementation, the first end **102** of the communication link **106** is configured to receive the data in form of the data frame **212** from the sensor **206** through the MAC layer **210A.** Thereafter, the data frame **212** is received by the logic **114** of the communication interface **110.** The logic **114** is configured to cooperate with the other communication interface **112** so that the logic **114** can send the data frame **212** to the second end **104** and over the one awake communication lane amongst the said communication lanes **108A-108N.** For example, if the communication lane **108A** is an awake communication lane, and the communication lanes **108B-108N** are asleep communication lanes, then the logic **114** sends the data to the second end **104** over the communication lane **108A.** As the communication link **106** includes one awake communication lane. Thus, there will be a seamless transmission of data from the communication interface **110** to the other communication interface **112.** Moreover, the communication link **106** is useful to send the data from the first end **102** to the second end **104** with a full data rate and with an improved bandwidth. In an example, the communication lane **108B** is one asleep communication lane. In another example, there exists more than one asleep communication lanes, such as the communication lanes **108B, 108C,** and other subsequent communication lanes up to **108N** are the asleep communication lanes. Alternatively stated, the at least one asleep communication lane amongst the communication lanes **108B-108N** is in the sleep mode (i.e., which cannot send any data). Therefore, in another implementation, the communication link **106** can also send the data from the second end **104** to the first end **102** with a low data rate because there is no need to operate all the communication lanes **108A-108N.** Instead, just one communication lane (e.g., the communication lane **108A)** is sufficient, which reduces overall power consumption. In the circuit architecture **200A,** data transfer from the sensor **206** to the switch **208** is depicted, and corresponding sub blocks of physical layers (e.g., P1, P2, and P4) are also enabled to facilitate full data rate.

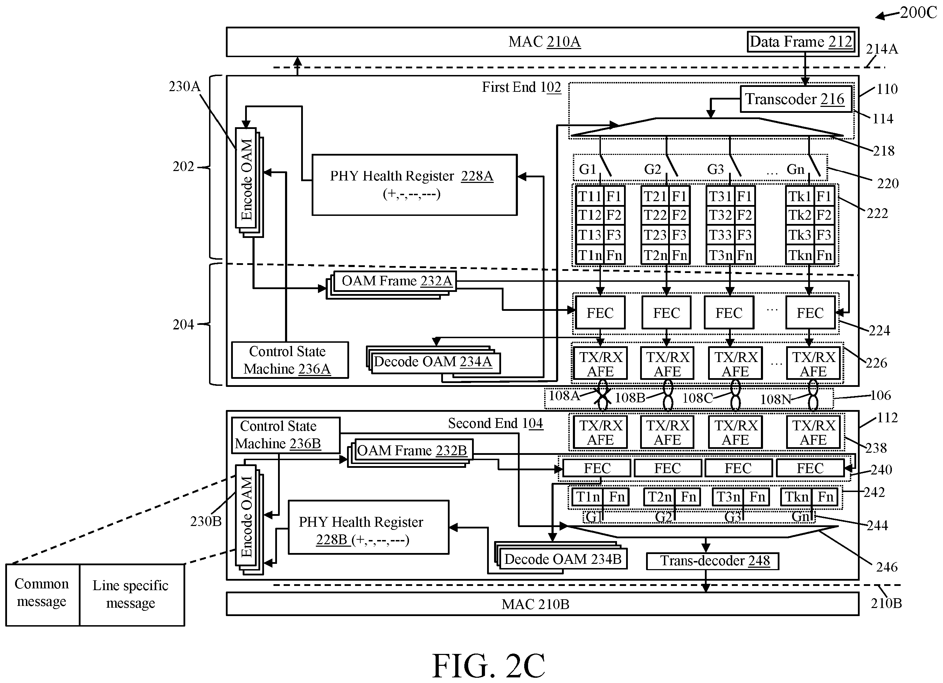

The logic **114** being further configured to store a communication lane status for the said awake communication lane, and when detecting that the communication lane status for the said awake communication lane has changed to a first determined status. The logic **114** is further configured to stop sending data over the awake communication lane and change the asleep communication lane into a new awake communication lane. The logic **114** is further configured to inform the other communication interface **112** at the second end **104** that the new awake communication lane will be used to send data and send data to the second end over the new awake communication lane. In an implementation, the communication lane **108A** acts as an awake communication lane (or active), and the communication lanes **108B-108N** acts as asleep communication lanes (or inactive). Moreover, the logic **114** is configured to store the communication lane status for the said awake communication lane, such as communication lane **108A.** In an example, the communication lane status corresponds to communication lane health and availability of the awake communication lane. Thus, if the communication lane status for the communication lane **108A** is changed to the first determined status, as further shown and described in detail, for example, in FIG. 2C. Then, the first determined status will be detected by the logic **114.** Therefore, the logic **114** of the communication interface **110** is beneficial for an early detection of the first determined status of the communication lane **108A.** In an example, the first determined status represents an error in signal to noise ratio, error in bit error rate, and also the unknown status of supply voltage, of local/remote communication link status, as well as of loopback mode tests. In an example, the first determined status is represented via a '--' symbol in the physical health register **228A.** Thereafter, the first determined status (e.g., '--') of the communication lane **108A** is shared with the other communication interface **112** of the second end **104.** Moreover, if both the communication interface **110** and the other communication interface **112** agree that the communication link status of the communication lane **108A** is changed to the first determined status. Then the logic **114** of the communication interface **110** is configured to not to send the data over the communication lane **108A.** The logic **114** is further configured to change the communication lane **108B** from the asleep communication lane to the new awake communication lane. After that, the logic **114** informs the other communication interface **112** that the new awake communication lane (i.e., communication lane **108B)** will be used to send data from the first end **102** to the second end **104.**

The logic **114** is further configured to send the data from the first end **102** to the second end **104** over the new awake communication lane, such as over the communication lane **108B.** Therefore, the logic **114** of the communication interface **110** allows seamless communication of the data from the first end **102** to the second end **104** in case of a lane failure.

In an implementation, the logic **114** is further configured to store the communication lane status of the communication lane **108B.** For example, if the communication lane status of the communication lane **108B** is changed to the first determined status. Then, the logic **114** of the communication interface **110** is configured to not to send the data over the communication lane **108B.** Moreover, the logic **114** is further configured to change the communication lane **108C** from the asleep communication lane to the new awake communication lane. Thereafter, the communication lane status of the new awake communication lane (i.e., the communication lane **108C)** is informed to the other communication interface **112** at the second end **104** that the communication lane **108C** will be used to send data from the first end **102** to the second end **104.** Finally, the logic **114** is configured to send the data from the first end **102** to the second end **104** over the new awake communication lane, such as over the communication lane **108C.** Thus, as soon as the first determined status is detected for the awake communication lane, the logic **114** of the communication interface **110** will detect the first determined status and takes action accordingly. Beneficially, as long as there exists at least one awake communication lane (i.e., one fault-free communication lane), the transmission of data takes place seamlessly between the first node **102A** of the first end **102** to the second node **104A** of the second end **104.**

The logic **114** is further configured to split a data frame **212** into a number of subframes corresponding to the number of awake communication lanes, the data to be transmitted over the awake communication lanes being one of said number of subframes. In an example, the logic **114** includes the transcoder **216,** and the de-multiplexer **218.** Moreover, the transcoder **216** is configured to receive the data frame **212** from the sensor **206.** The transcoder **216** is configured to receive the data frame **212** through the MAC layer **210A** and the medium independent interface layer **214A.** Thereafter, the transcoder **216** passes the data frame **212** to the de-multiplexer **218,** which is configured to split the data frame **212** into the number of subframes that corresponds to the number of awake communication lanes amongst the said communication lanes. For example, in the circuit architecture **200A,** each of the number of communication lanes **108A-108N** is used, therefore, the data frame **212** is splitted to N number of subframes (e.g., F1 to Fn). Thereafter, each of the number of communication lanes **108A-108N** is configured to transmit the N number of subframes (i.e., F1 to Fn) from the first end **102** to the second end **104.** By virtue of using the number of subframes, a high-speed communication can be obtained.

In accordance with an embodiment, the communication interface **110** further comprises, for each given communication lane amongst all the awake communication lanes and all the asleep communication lanes, a buffer configured to receive data to be transmitted, over the given communication lane, to a corresponding buffer in the other communication interface **112** at the second end **104.** The communication interface **110** further comprises a gate configured to open or close the input in the buffer of data to be transmitted over the given communication lane to the corresponding buffer in the other communication interface **112** at the second end **104.** The logic **114** is configured to control the gate depending on the communication lane status of the given communication lane. In an implementation, the transcoder **216** receives the data frame **212** from the MAC layer **210A,** where the data frame **212** includes fixed size of data. Thereafter, the transcoder **216** adds first few bits in the data frame **212** for control purpose and depending on the communication lane status of the given communication lane (i.e., availability and the functioning number of the communication lanes). Thereafter, the de-multiplexer **218** of the logic **114** is configured to split the data frame **212** into the number of subframes, which are further received by the number of buffers **222** through the number of gates **220.** In an example, the number of subframes is equal to the number of gates **220,** such as for N-number gates (i.e., G1 to Gn), there exits N-number of subframes (i.e., F1 to Fn). The number of gates **220** are further controlled by the logic **114** based on the communication lane status of each communication lane **108A-108N.** For example, if the communication lane status shows that all the communication lanes **108A-108N** are the awake communication lane. Then, the logic **114** is configured to open the number of gates **220** corresponds to each communication lane **108A-108N,** so that the corresponding buffers from the number of buffers **222** can receive the number of subframes. However, in another implementation, if the communication lane status shows that only the communication lane **108A** is the awake communication lane, and the communication lane **108B** is the asleep communication lane. Then, the logic **114** is configured to open the gate (i.e., G1) corresponds to the communication lane **108A,** and close the gate (i.e., G2) corresponds to the communication lane **108B.** As a result, the buffer corresponds to the communication lane **108A** can receive the number of subframes F1 to Fn, while the buffer corresponds to the communication lane **108B** will not receive any subframe.

In an implementation, each subframe that enters to each of the number of buffers **222** will be encoded by an index Tₖₙ, where k refers to the gate identification (ID) that allows the subframe to enter to each of the number of buffers **222,** and n refers to the data frame **212** identification (ID), and the data frame **212** is an integer and may reset and repeat after overflow. For example, a frame F1 corresponds to the communication lane **108A** is encoded by an index T11, and a frame F1 corresponds to the communication lane **108B** is encoded by an index T21, and similar for subsequent communication lanes.

In another implementation, the number of subframes is represented via a pipe data for each of the communication lanes **108A-108N,** where the size of the pipe data is equivalent to frame input of the number of FEC blocks **224,** which are configured to encode the received input. For example, if there exists N-number of frame inputs, then the size of pipe data will also be of N-numbers. Moreover, if the pipe data corresponds to the one of the communication lanes **108A-108N** is filled, then the subframes are received by the corresponding FEC block. For example, if the pipe data corresponds to the communication lane **108A** is filled, then the corresponding subframes are transmitted to the corresponding the FEC block from the number of FEC blocks **224,** and similar for subsequent communication lanes. In an implementation, each FEC block from the number of FEC blocks **224** further received an OAM message from the OAM frame **232A,** where the OAM message is received from the physical health register **228A** through the encode OAM block **230A.** Thus, the number of FEC blocks **224** are configured to encode the number of subframes along with the OAM message into its frame. After that, a number of bits are mapped into symbols as a part of line coding. Moreover, an output of each FEC block from the number of FEC blocks **224** is further transmitted to the decode OAM block **234A,** as well as to the corresponding transmitter/receiver analog front end from the number of TX/RX-AFE **226.**

The output of the decode OAM block **234A** is further received by the physical health register **228A.** The physical health register **228A** is configured to store local and remote physical layers (e.g., the physical layers of the first end **102** as well as the second end **104** of the communication link **106),** status (e.g., signal-to-noise-ratio, SNR, bit error rate, BER) of the communication link **106,** health of the communication link **106** (or cable health, such as open or short), FEC errors and scrambler and identity of the number of communication lanes **108** which are functional at a time. As shown in FIG. 2A, the physical health register **228A** represents the communication lane status of the given communication lane via different symbols. For example, a first symbol, "+" of the physical health register **228A** represents that the given communication lane is in good health, and a second symbol, "-" (herein also referred as a second determined status) of the physical health register **228A** represents that the given communication lane is not in good health, due to an error in the signal to noise ratio. Moreover, a third symbol, "--" (herein also referred to as the first determined status) of the physical health register **228A** represents that the given communication lane is not in good health due to an error in the signal to noise ratio, the bit error rate, an unknown supply voltage, an unknown local/remote link status, and an unknown loopback mode. Similarly, a fourth symbol, "---" of the physical health register **228A** represents that the given communication lane is broken (or a lane is turned into a failure).

Thereafter, an output of the physical health register **228A** is sent to encode OAM block **230A,** which is configured to encode the OAM message with the help of a signal received from the control state machine **236A.** In an example, the encode OAM block **230A** consists of two types of OAM messages namely, an OAM common message and a lane specific OAM message. In an example, the OAM common message is of a ratio of 2:0, and the OAM common message includes eight (8) different combinations of a common message to notify the number of communication lanes **108A-108N.** Similarly, the lane specific OAM message is of a ratio of 8:3, and the lane specific OAM message includes sixty-four (64) different combination of a messages to notify individual communication lane. In addition, the OAM common message is common to all the communication lanes, and the lane specific OAM message, which is specific to one communication lane only.

Moreover, the output of the encode OAM block **230A** (i.e., either the OAM common message or the lane specific OAM message) is further sent to the number of FEC blocks **224.** In other words, the OAM message is further glued to a FEC frame of the number of FEC blocks **224** during the encoding of the FEC frame at the number of TX/RX-AFE **226,** and the process is repeated continuously based on the communication lane status of each of the number of communication lanes **108A-108N.** Thereafter, the OAM message and the output of each of the FEC block from the number of FEC blocks **224** is transmitted by the number of TX/RX-AFE **226** from the first end **102** to the second end **104** and through the communication lanes **108A-108N.**

Thereafter, the number of subframes (or symbols) are received and processed by the number of TX/RX-AFE **238** of the second end **104.** The received subframes are further passed to the corresponding FEC block from the number of FEC blocks **240,** which are configured to decode each subframe from the number of subframes. As a result, the FEC data and the OAM message (i.e., either the OAM common message or the lane specific OAM message) are separated. In other words, the OAM message is recovered from the FEC frame, which is beneficial to determine the communication lane status. The OAM message (that includes either the common message or the lane specific message) further goes to the decode OAM block **234B.** The output of the decode OAM block **234B** is further connected to the physical health register **228B,** where bits of the OAM message are stored in their corresponding space within the physical health register **228B** (or memory). In other words, the OAM messages (or relevant OAM messages) are interpreted locally after decoding and stored in the physical health register **228B.** Further, if needed, necessary actions will be taken based on the OAM message. The physical health registers **228A** and **228B** are beneficial to regularly communicate to each other about the availability of communication lanes **108A-108N** through the OAM message.

In addition, the output of each FEC block of the number of FEC blocks **240** further goes to each pipe data of the corresponding buffer. As a result, each buffer from the number of buffers **222** transmits the number of subframes from the communication interface **110** of the first end **102** to the corresponding buffer of the number of buffers **242** in the other communication interface **112** at the second end **104** with the high-data rate. The output of each of the number of buffers **242** is further passed through the corresponding gate from the number of gates **244,** through the multiplexer **246,** and finally received by the trans-decoder **248.** The trans-decoder **248** is configured to remove the added control signals from the received data. Therefore, a valid data (or the data frame **212)** can be decoded correctly at the second end **104** by the trans-decoder **248.** The received data is passed to the MAC layer **210B** via the medium independent interface layer **214B.** In an example, the order of opening the gates **244** at the number of TX/RX-AFE **226** and the number of TX/RX-AFE **238** are to be same as it was done at the first end **102** (i.e., transmitter end).

In accordance with other embodiment, the data to be transmitted over the awake communication lanes is a control message containing a control information to be used for controlling the working of a device located at the second end **104** and connected to the other communication interface **112** at said second end **104.** Alternatively stated, the logic **114** initially takes a fixed size of data from the MAC layer **210A.** Thereafter, the logic **114** adds first few bits of the control message containing the control information for control purposes. The control message is used to control the device, such as the switch **208,** which is located at the second end **104.** As the device is connected to the other communication interface **112.** Thus, the other communication interface **112** is useful to bring the device into maintenance or repair mode, and also to change the configuration parameters of the device.

In accordance with an embodiment, the logic **114** being further configured, when detecting that the communication lane status for the said awake communication lane has changed to a second determined status. The logic **114** is further configured to change the asleep communication lane into a new awake communication lane and inform the other communication interface **112** at the second end **104** that the new awake communication lane will be used to send data. The logic **114** is further configured to send data to the second end **104** over the awake communication lane and over the new awake communication lane. In an example, if the communication lane **108A** is the awake communication lane, and the communication lane **108B** is the asleep communication lane. Moreover, if the logic **114** detects that the communication lane status of the communication lane **108A** is changed to the second determined status (i.e., an error in signal to noise ratio). Then, the logic **114** is configured to use the communication lane **108A** as long as the communication lane status does not degrade below the second determined status. In addition, the logic **114** changes the communication lane **108B** into the new awake communication lane. As a result, there exists the awake communication lane (i.e., the communication lane **108A** with the second determined status), and the new awake communication lane (i.e., the communication lane **108B** in healthy condition). Thereafter, the logic **114** informs the other communication interface **112** at the second end **104** that the communication lane **108B** will also be used to send data along with the communication lane **108A.** Moreover, the logic **114** sends the data to the second end **104** over the communication lane **108B** and also over the communication lane **108A.** By virtue of using the awake communication lane as well as the new awake communication lane to send the data from the communication interface **110** to the other communication interface **112,** there will be a seamless data transmission. In an example, the logic **114** is further configured to monitor and update the communication lane status for the said awake communication lane to the other communication interface **112.**

Therefore, the disclosed communication interface **110** provides seamless data communication between the first end **102** and the second end **104** of the communication link **106,** even in case of a lane failure. Additionally, the logic at the communication interface is configured for early detection of the first determined status of a communication lane amongst the said communication lanes **108A-108N** and accordingly communicate each of the communication interfaces **110** and **112** at the first end and **102** the second end **104** of the communication link **106** about the communication lane with the first determined status and maintain the data communication seamlessly by use of the other communication lanes. The communication interface **110** at the first end **102** is configured to transmit the data to the other communication interface **112** at the second end **104** with a full data rate and with an improved bandwidth by making all the communication lanes **108A-108N** in an operation mode. Moreover, the other communication interface **112** at the second end **104** is configured to transmit the data to the communication interface **110** at the first end with a low data rate, and hence, there is no need to operate all the communication lanes **108A-108N,** simultaneously. Instead, merely one communication lane is sufficient to transmit the data from the second end **104,** resulting in a reduced power consumption and more energy efficiency. Therefore, one communication lane is used as the awake communication lane, and remaining communication lanes are configured to stay in sleep mode in order to save energy. If the awake communication lane turned in a lane failure, then, one of the communication lanes which are set in sleep mode is changed into the new awake communication lane for data communication. Thus, there will be a seamless as well as asymmetric transmission of data from the communication interface **110** to the other communication interface **112** or vice-versa. Moreover, as long as there exists at least one awake communication lane (i.e., one fault-free communication lane), the transmission of data takes place seamlessly between the first end **102** to the second end **104.** By virtue of providing variable data rates, each of the communication interface **110** and the other communication interface **112** can be used in an Institute of Electrical and Electronics Engineers (IEEE) standard namely, IEEE 802.3cy for providing 25/50/100 Gbits/s.

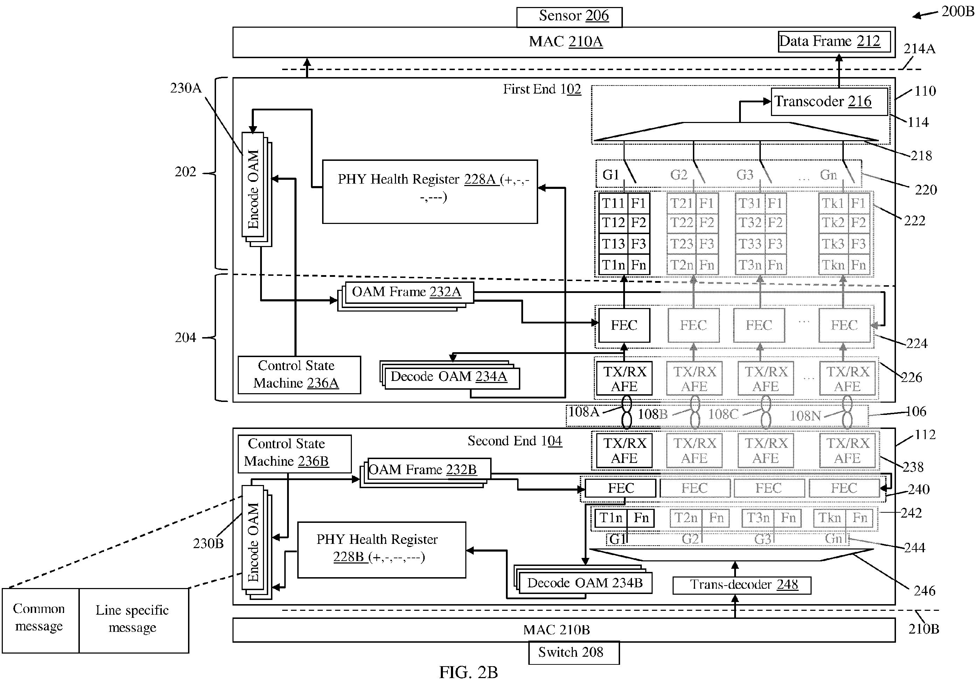

FIG. 2B illustrates communication between various sub-blocks associated with communication interfaces of a second end and a first end, in accordance with other embodiment of the present disclosure. FIG. 2B is described in conjunction with elements from FIG. 1 and 2A. With reference to FIG. 2B, there is shown a circuit architecture **200B** that illustrates communication between various sub-blocks associated with the communication interface **110** of the first node **102A** and the other communication interface **112** of the second node **104A** of the communication network **100** (of FIG. 1).

As shown in FIG.2B, the switch **208** is configured to send the data to the sensor **206,** which is also referred to as down-link communication of the data. There is shown that the communication lane **108A** is the awake communication lane, while the communication lanes **108B-108N** are the asleep communication lanes. Therefore, the communication link **106** is useful to send the data from the second end **104** to the first end **102** with a low data rate because there is no need to operate all the communication lanes **108A-108N.** Instead, just one communication lane, such as the communication lane **108A** is sufficient for data communication, whichreduces power consumption and leads to more energy efficiency.

In accordance with another embodiment, the buffer is configured to receive data transmitted over the given communication lane from the corresponding buffer in the other communication interface **112** at the second end **104,** and the gate is configured to open or close the output of data received over the given communication lane, the logic **114** being configured to control the gate depending on the communication lane status of the given communication lane. In an implementation, the trans-decoder **248** (acts as a transcoder) receives the data from the MAC layer **210B** of the other communication interface **112.** Thereafter, the de-multiplexer **260** splits the data frame **212** into the number of subframes, which are further received by the number of buffers **242** and through the number of gates **244.** The number of subframes are further received by the number of FEC blocks **240,** where the number of FEC blocks **240** further receive an OAM message from the physical health register **228B,** through the encode OAM block **230B,** and the OAM frame **232B.** Moreover, an output of each FEC encoder is further transmitted to the decode OAM block **234A,** as well as to the corresponding TX/RX-AFE from the number of TX/RX-AFE **226.** Thereafter, the OAM message and the output of the number of FEC blocks **224** is transmitted by the number of TX/RX-AFE **256** from the second end **104** to the first end **102** and through the communication lanes **108A-108N.**

Thereafter, the number of subframes (or symbols) are received and processed by the number of TX/RX-AFE **226** of the first end **102.** Moreover, the received subframes are further passed to the corresponding FEC block from the number of FEC blocks **224,** which are configured to decode each subframe of the number of subframes. As a result, the FEC data and the OAM message are separated (or the OAM message is recovered from the FEC frame). In addition, the OAM message further goes to the decode OAM block **234A,** and the output of the decode OAM block **234A** is further connected to the physical health register **228A,** where bits of the OAM message is stored in their corresponding space in the physical health register **228A** (or memory).

In addition, the output of each FEC block from the number of FEC blocks **224** further goes to each pipe data of the corresponding buffer from the number of buffers **222.** The output of each buffer is further passed through the number of gates **220,** where the number of gates **220** are further controlled by the logic **114** based on the communication lane status of each communication lane **108A-108N.** For example, if the communication lane status shows that only the communication lane **108A** is the awake communication lane, and the communication lanes **108B-108N** are the asleep communication lane. Then, the logic **114** is configured to open the gate (i.e., G1) corresponding to the communication lane **108A,** and closes the gate (i.e., G2) corresponding to the communication lanes **108B-108N.** As a result, only the buffer corresponds to the communication lane **108A** can send the number of subframes to the de-multiplexer **218,** while the buffers corresponding to the communication lanes **108B-108N** will not be able to transmit the number of subframes to the de-multiplexer **218.** Thereafter, the number of subframes are finally received by the transcoder **216** (acts as a trans-decoder), which is configured to remove added control signals from the received number of subframes (or data). Further, the received data in the form of the number of subframes is passed to the MAC layer **210A** via the medium independent interface layer **214A.**

FIG. 2C illustrates communication between various sub-blocks associated with communication interfaces of a first end and a second end, in accordance with other embodiment of the present disclosure. FIG. 2C is described in conjunction with elements from FIG. 1, 2A, and 2B. With reference to FIG. 2C, there is shown a circuit architecture **200C** that illustrates communication between various sub-blocks associated with the communication interface **110** of the first node **102A** and the other communication interface **112** of the second node **104A** of the communication network **100** (of FIG. 1).

In the circuit architecture **200C,** initially, the number of communication lanes **108B-108N** are in a healthy state, due to which the sensor **206** can send the data to the switch **208** at high (or full) data rate. Thereafter, the logic **114** detects that the communication lane status of the communication lane **108A** is changed from a healthy state (i.e., from '+') to the first determined status (i.e., '--'), which represents that the communication lane **108A** is not in good health. After some time, the communication lane status of the communication lane **108A** is changed from the first determined status (i.e., '--') to the failure of the communication lane **108A** (i.e., '---'), due to which the communication lane **108A** will not be able to send the data, as shown in FIG. 2C by a crossed mark on the communication lane **108A.** Then, a message is shared firstly and acknowledged between the communication link **106** partners. For example, a "common message" field of OAM message is shared firstly and acknowledged between the communication interface **110** and the other communication interface **112.** Moreover, when the communication interface **110** and the other communication interface **112** aggress that there exists the first determined status in the communication lane **108A,** and the corresponding gate (e.g., G1) need to be closed at the communication interface **110** and also at the other communication interface **112.** Immediately, both the MAC layer **210A** and **210B** are notified via corresponding medium independent interface layers **214A** and **214B** that the capacity of the communication link **106** will be lowered from the sensor **206** to the switch **208.**

Thereafter, the data received from the MAC layer **210A** starts to fill the number of buffers **222** (or the pipe data) starting from a second gate (i.e., G2) till Nth gate (i.e., Gn) and repeats again. Since only the communication lane **108A** has the first determined status, thus, the transcoder **216** provides the number of subframes that fits to the remaining buffers that are still in operation, such as the buffers that correspond to the communication lanes **108B-108N.** In the transcoder **216** a space that corresponds to the gate of the communication lane **108A** (i.e., G1)), which is currently not functioning will be filled with a dummy data, and later that dummy data will be just ignored. This further leads a correct decoding at a receiver (or the other communication interface **112).** In other words, a valid data can be decoded correctly at the other communication interface **112** of the second end **104.** In this way, as long as there is a fault in one communication lane, free communication takes place seamlessly between both ends (i.e., the first end **102** and the second end **104)** of the communication link **106** with a partially reduced speed. In an example, during the data transmission from the second end **104** to the first end **102,** all control, as well as the OAM message, are communicated via the communication lane **108B.**

In another implementation, despite the failure of the communication lane **108A,** the logic **114** regularly checks the health of the communication lane **108A** (e.g., via the control state machine **236A).** In case, the health of the communication lane **108A** turns from the first determined status (i.e., from ('--') or from the lane failure) to the healthy state (i.e., +). Then, the logic **114** is configured to open the said awake communication lane (e.g., the communication lane **108A)** as well as the corresponding gate (e.g., G1). As a result, there exists a seamless communication from the sensor **206** to the switch **208.**

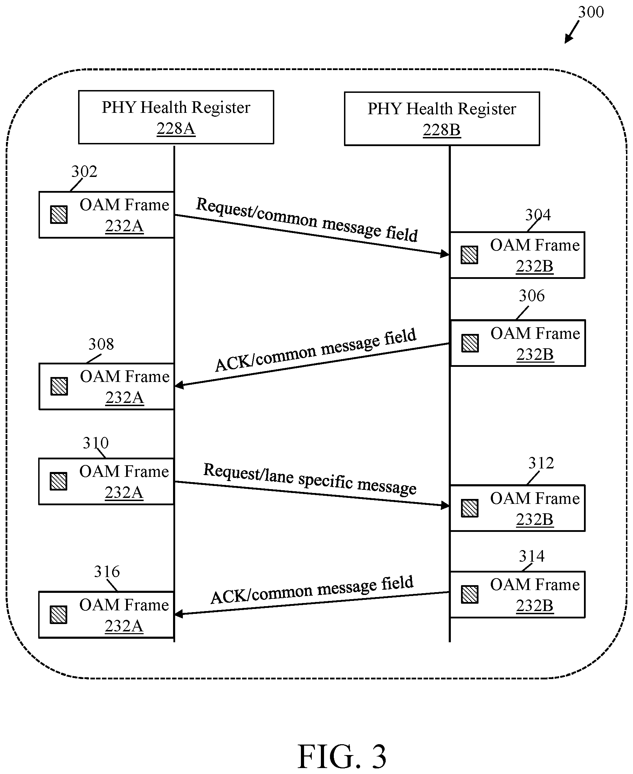

FIG. 3 is a sequence diagram that depicts an interaction process between two physical health registers, in accordance with an embodiment of the present disclosure. FIG. 3 is described in conjunction with elements from FIGs. 1, 2A, 2B, and 2C. With reference to FIG. 3, there is shown a sequence diagram **300** that depicts an interaction process between the two physical health registers, such as the physical health register **228A** of the communication interface **110** and the physical health register **228B** of the other communication interface **112.** The sequence diagram **300** includes operations **302** to **316.**

At operation **302,** the physical health register **228A** detects that a communication lane status for an awake communication lane has changed to a first determined status at the first end **102.** For example, the physical health register **228A** of the first end **102** detects that the communication lane status for the communication lane **108A** has changed to the first determined status. Thereafter, the physical health register **228A** notifies the MAC layer **210A** of the first end **102** and closes the awake communication lane (i.e., the communication lane **108A)** as well as the corresponding gate (e.g., G1). The physical health register **228A** further notifies and requests the physical health register **228B** to close the awake communication lane (i.e., the communication lane **108A)** as well as the corresponding gate (i.e., G1) at the second end **104.** In an example, the physical health register **228A** of the first end **102** notifies and requests the physical health register **228B** of the second end **104** via a common message field (CMF) of the OAM message, and through the OAM frame **232A,** where the number of communication lanes **108A-108N** sends same common message field (CMF). In an example, the physical health register **228B** also determines a new speed and a new functioning communication lane.

At operation **304,** the physical health register **228B** receives and decodes the received common message field (CMF) of the OAM message through the OAM frame **232B.**

At operation **306,** the physical health register **228B** receives and reads the common message field (CMF) of the OAM message through the OAM frame **232B.** Thereafter, the physical health register **228B** executes the received message. The physical health register **228B** further notifies the MAC layer **210B** and closes the said awake communication lane (i.e., the communication lane **108A)** with the first determined status as well as the corresponding gate (i.e., G1). After that, the physical health register **228B** share an acknowledgment message to the physical health register **228A** via the common message field of the OAM message. Moreover, the physical health register **228B** starts decoding data accordingly.

At operation **308,** the physical health register **228A** receives the acknowledgment message from the physical health register **228B,** where the acknowledgment message confirms that the physical health register **228B** closed the awake communication lane (e.g., the communication lane **108A)** with the first determined status as well as the corresponding gate (e.g., G1).

At operation **310,** despite of the failure of the communication lane **108A,** the logic **114** regularly checks the health of the communication lane **108A** (e.g., via the control state machine **236A).** Moreover, the physical health register **228A** determines that the communication lane status of the said awake communication lane (e.g., the communication lane **108A)** is now in a healthy state. In other words, the health of the communication lane **108A** turns from the first determined status (i.e., from '--') in the physical health register **228A)** to the healthy state (i.e., '+' in the physical health register **228A).** Then, the physical health register **228A** requests the physical health register **228B** to open the said awake communication lane (e.g., the communication lane **108A)** as well as the corresponding gate (e.g., G1). In an example, the physical health register **228A** notifies and requests the physical health register **228B** via a lane specific field (LSF) message of the OAM message and through the OAM frame **232A.**

At operation **312,** the physical health register **228B** receives and decodes the received lane specific field message of the OAM message through the OAM frame **232B.**

At operation **314,** the physical health register **228B** receives and reads the lane specific field message of the OAM message through the OAM frame **232B.** Thereafter, the physical health register **228B** executes the received lane specific field message. The physical health register **228B** further notifies the MAC layer **210B** and opens the said awake communication lane (i.e., the communication lane **108A)** as well as the corresponding gate (i.e., G1). After that, the physical health register **228B** shares another acknowledgment message to the physical health register **228A** via the common message field of the OAM message.

At operation **316,** the physical health register **228A** receives the other acknowledgment message from the physical health register **228B,** where the other acknowledgment message confirms that the physical health register **228B** opened the awake communication lane (e.g., the communication lane **108A)** as well as the corresponding gate (e.g., G1). The physical health register **228A** further notifies the MAC layer **210A** and opens the said awake communication lane (i.e., the communication lane **108A)** as well as the corresponding gate (i.e., G1). As a result, there exists a seamless data communication through all the communication lanes **108A-108N.**

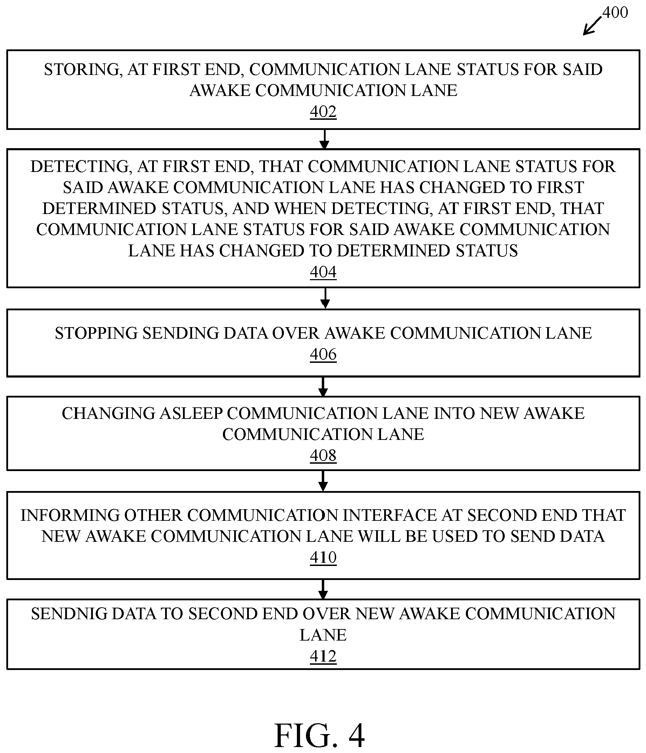

FIG. 4 is a flowchart of a method of communication over a communication link comprising a number of communication lanes, in accordance with an embodiment of the present disclosure. FIG. 4 is described in conjunction with elements from FIGs. 1, 2A, 2B, 2C and 3. With reference to FIG. 4, there is shown a method **400** of communication over the communication link **106** comprising the number of communication lanes **108A-108N.** The method **400** includes steps **402** to **412.** The method **400** is executed by the communication interface **110** at the first end **102** of the communication link **106** and the other communication interface **112** at the second end **104** of the communication link **106.**

In other aspect, the present disclosure provides a method **400** of communication over a communication link **106** comprising a number of communication lanes **108A-108N** greater or equal to two and having a first end **102** and a second end **104,** the method **400** comprising sending data from the first end **102** to second end **104** over one awake communication lane amongst the said communication lanes **108A-108N,** at least one asleep communication lane amongst the said communication lanes being in a sleep mode in which it cannot send any data. In other words, the method **400** comprises sending the data over one awake communication lane amongst the said communication lanes **108A-108N,** and from the first end **102** to second end **104,** and vice versa. In an implementation, the first end **102** of the communication link **106** is configured to receive the data from the plurality of sensors. Thereafter, the data is received by the logic **114** of the communication interface **110** at the first end **102** of the communication link **106.** The logic **114** is configured to cooperate with the other communication interface **112** so that the logic **114** can send the data to the second end **104** and over the one awake communication lane amongst the said communication lanes **108A-108N.** As the communication link **106** includes one awake communication lane. Thus, there will be a seamless transmission of data from the communication interface **110** to the other communication interface **112.** The communication link **106** is beneficial to send the data from the first end **102** to the second end **104** with a full data rate and with an improved bandwidth. As the at least one asleep communication lane is in the sleep mode (i.e., which cannot send any data). Therefore, the communication link **106** can also send the data from the second end **104** to the first end **102** with a low data rate because there is no need to operate all the communication lanes **108A-108N.** Instead, just one communication lane is sufficient, which further reduces power consumption.

At step **402,** the method **400** comprises storing, at the first end **102,** a communication lane status for the said awake communication lane. In an example, the communication lane **108A** is configured to act as an awake communication lane (or active), and the communication lanes **108B-108N** are configured to act as asleep communication lanes (or inactive). Moreover, the method **400** comprises storing by the logic **114,** the communication lane status for the said awake communication lane, such as communication lane **108A.** In an example, the communication lane status corresponds to communication lane health and availability of the awake communication lane. The communication lane status is beneficial for detecting a change in the said awake communication lane.

At step **404,** the method **400** comprises detecting, at the first end **102,** that the communication lane status for the said awake communication lane has changed to a first determined status, and when detecting, at the first end **102,** that the communication lane status for the said awake communication lane has changed to the first determined status. In other words, if the communication lane status for the said awake communication lane (e.g., the communication lane **108A)** is changed to the first determined status. Then, the first determined status will be detected by the logic **114.** Therefore, the logic **114** of the communication interface **110** is beneficial for early detection of the first determined status (or lane failure).

At step **406,** the method **400** comprises stopping sending data over the awake communication lane. In other words, if the communication lane status for the said awake communication lane (e.g., the communication lane **108A)** is changed to the first determined status. Then, the logic **114** of the communication interface **110** is configured to not to send the data over the communication lane **108A.**

At step **408,** the method **400** comprises changing the asleep communication lane into a new awake communication lane. For example, the logic **114** is configured to change the communication lane **108B** from asleep communication lane to the new awake communication lane. The new awake communication lane is useful to provide the seamless data transmission from the communication interface **110** to the other communication interface **112.**

At step **410,** the method **400** comprises informing the other communication interface **112** at the second end **104** that the new awake communication lane will be used to send data. In other words, the logic **114** is configured to inform the other communication interface **112** that the communication lane **108B** will be used to send data from the communication interface **110** to the other communication interface **112**

At step **412,** the method **400** comprises sending data to the second end **104** over the new awake communication lane. In other words, if both the communication interface **110** and the other communication interface **112** agree that the communication lane status for the said awake communication lane has changed to the first determined status (i.e., there is a fault in communication lane **108A).** Then, the logic **114** is configured for sending the data to the second end **104** over the new awake communication lane, such as over the communication lane **108B.**

The method **400** further comprising splitting, at the first end **102,** a data frame **212** into a number of subframes corresponding to the number of awake communication lanes, the data to be transmitted over the awake communication lanes being one of the said subframes. In an implementation, the method **400** comprises receiving the data in the form of the data frame **212** from a sensor that is arranged near the first end **102** of the communication link **106.** Thereafter, the method **400** comprises splitting, at the first end **102,** the data frame **212** into the number of subframes corresponding to the number of awake communication lanes. In an implementation, the logic **114** is configured to split the data frame **212** into the number of subframes. Thereafter, the awake communication lane is configured to transmit the number of subframes, such as from the communication interface **110** to the other communication interface **112** and through the communication link **106.** By virtue of using the number of subframes, an overall bandwidth required for the communication link **106** is improved.

In accordance with an embodiment, the method **400** further comprises, for each given communication lane amongst all the awake communication lanes and all the asleep communication lanes, inputting, in a buffer at the first end **102,** data to be transmitted, over the given communication lane, to a corresponding buffer at the second end. The method **400** further comprises controlling a gate at the first end to open or close the input in the buffer of data to be transmitted over the given communication lane, to the corresponding buffer at the second end **104,** depending on the communication lane status of the given communication lane. In an implementation, the transcoder **216** at the first end **102** receives the data frame **212** from the MAC layer **210A,** where the data frame **212** includes a fixed size of data. Thereafter, the de-multiplexer **218** of the logic **114** is configured to split the data frame into the number of subframes, which are further received by the number of buffers **222** through the number of gates **220.** The number of gates **220** are further controlled by the logic **114** based on the communication lane status of each communication lane **108A-108N.** For example, if the communication lane status shows that only the communication lane **108A** is the awake communication lane, and the communication lane **108B** is the asleep communication lane. Then, the logic **114** is configured to open the gate (i.e., G1) corresponds to the communication lane **108A,** and close the gate (i.e., G2) corresponds to the communication lane **108B.** As a result, the buffer corresponds to the communication lane **108A** can receive the number of data frames, while the buffer corresponds to the communication lane **108B** will not receive any data frame. Thereafter, the buffer corresponds to the communication lane **108A** receives the frames F1 to Fn, and similar for subsequent awake communication lanes.

Therefore, depending on the communication lane status of the given communication lane, the data in the form of the number of subframes is transmitted from the first end **102** to the second end **104** and through the communication lanes **108A-108.** The number of subframes (or symbols) are further received and processed at the second end **104.** As a result, each buffer of the number of buffers **222** transmits the number of subframes from the communication interface **110** of the first end **102** to the corresponding buffer of the number of buffers **242** at the other communication interface **112** at the second end **104.** Thereafter, a valid data is decoded correctly at the second end **104** (e.g., by the trans-decoder **248),** and the received data is passed to the MAC layer **210B** via medium independent interface layer **214B.** In an example, the order of opening the number of gates **244** at the number of TX/RX-AFE **226** and the number of TX/RX-AFE **238** are to be same as it was done at the first end **102** (i.e., transmitter end). Beneficially, as long as there is one awake communication lane (i.e., fault-free communication lane), the communication of the data takes place seamlessly between the communication link **106** partners with reduced speed, such as between the communication interface **110** and the other communication interface **112.**

In accordance with other embodiment, the communication interface **110** further comprising receiving in the buffer at the first end **102,** data transmitted over the given communication lane from the corresponding buffer at the second end **104,** and controlling the gate at the first end **102** to open or close the output of data received over the given communication lane, depending on the communication lane status of the given communication lane. In an implementation, the data in the form of the number of subframes is transmitted from the second end **104** to the first end **102** and through the communication lanes **108A-108N.** Thereafter, the number of subframes (or symbols) are received and processed at the first end **102** and sent to each pipe data of the corresponding buffer from the number of buffers **222.** The output of each buffer from the number of buffers **222** is further passed through the number of gates **220,** where the number of gates **220** are controlled by the logic **114** based on the communication lane status of each communication lane **108A-108N.** For example, if the communication lane status shows that only the communication lane **108A** is the awake communication lane, and the communication lane **108B** is the asleep communication lane. Then, the logic **114** is configured to open the gate (i.e., G1) corresponds to the communication lane **108A,** and close the gate (i.e., G2) corresponds to the communication lane **108B.** As a result, a valid data can be decoded correctly at the first end **102.** The received the data is further passed to the MAC layer **210A** via the medium independent interface layer **214A.**

In accordance with other embodiment, the data to be transmitted over the awake communication lanes is a control message containing a control information to be used for controlling the working of a device located at the second end **104** and connected to the other communication interface **112** at said second end **104.** Alternatively stated, the logic **114** (e.g., a transcoder) initially takes the fixed size of data from the MAC layer **210A.** Thereafter, the logic **114** adds the first few bits of the control message containing the control information for control purposes. The control message is beneficial to control the device, such as the switch **208,** which is located at the second end **104.** As the device is connected to the other communication interface **112.** Thus, the other communication interface **112** is useful to bring the device into maintenance or repair mode, and also to change the configuration parameters of the device.

In accordance with yet other embodiment, the method **400** further comprises detecting, at the first end **102,** that the communication lane status for the said awake communication lane has changed to a second determined status, and when detecting, at the first end **102,** that the communication lane status for the said awake communication lane has changed to the second determined status. The method **400** further comprises changing the asleep communication lane into a new awake communication lane, and informing the communication interface at the second end that the new awake communication lane will be used to send data. The method **400** further comprises sending data to the second end over the awake communication lane and over the new awake communication lane. In an example, if the communication lane **108A** is the awake communication lane, and the communication lane **108B** is the asleep communication lane. Moreover, the method **400** comprises detecting that the communication lane status for the communication lane **108A** has changed to the second determined status. Then, the method **400** further comprises using the communication lane **108A** as long as the communication lane status does not degrade below the second determined status. The method **400** further comprises changing the communication lane **108B** into the new awake communication lane. As a result, there exists the awake communication lane (i.e., the communication lane **108A** with the second determined status), and the new awake communication lane (i.e., the communication lane **108B** in healthy condition). Thereafter, the method **400** further comprises, informing the other communication interface **112** at the second end **104** that the communication lane **108B** will be used to send data along with the communication lane **108A.** Moreover, the method **400** further comprises sending the data to the second end **104** over the communication lane **108B** along and also over the communication lane **108A.** Thus, the method **400** is beneficial to provide seamless data transmission from the communication interface **110** to the other communication interface **112.**

In other aspect, the present disclosure provides a computer program product comprising program code for performing the method **400,** when executed by a processor in a computer system. In an example, the program code is implemented on a non-transitory computer-readable storage medium which include, but is not limited to, Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), a computer readable storage medium, and/or CPU cache memory. In an example, the program code is generated by the computer program product, which is implemented in view of the method **400,** and for use in implementing the method **400** on the computer system.

Therefore, the disclosed method **400** provides seamless data communication between the first end **102** and the second end **104** of the communication link **106,** even in case of a lane failure. Additionally, the method **400** is configured for early detection of the first determined status of a communication lane amongst the said communication lanes **108A-108N.** The method **400** further communicate each of the communication interfaces **110** and **112** at the first end and **102** the second end **104** of the communication link **106** about the communication lane with the first determined status and maintain the data communication seamlessly by use of the other communication lanes. The method **400** is beneficial to transmit the data from the communication interface **110** at the first end **102** to the other communication interface **112** at the second end **104** with a full data rate and with an improved bandwidth by making all the communication lanes **108A-108N** in an operation mode. Moreover, the method **400** is also beneficial to transmit the data from the other communication interface **112** at the second end **104** to the communication interface **110** at the first end **102** with a low data rate, and hence, there is no need to operate all the communication lanes **108A-108N,** simultaneously. Instead, merely one communication lane is sufficient to transmit the data from the second end **104,** resulting in a reduced power consumption and more energy efficiency. Therefore, one communication lane is used as the awake communication lane, and the remaining communication lanes are configured to stay in sleep mode in order to save energy. If the awake communication lane turned in a lane failure, then, one of the communication lanes which are set in sleep mode is changed into the new awake communication lane for data communication. Thus, there will be a seamless as well as asymmetric transmission of data from the communication interface **110** to the other communication interface **112** and vice-versa. Moreover, as long as there exists at least one awake communication lane (i.e., one fault-free communication lane), the transmission of data takes place seamlessly between the first end **102** to the second end **104.**

## Claims

1. A communication interface (110) for use at a first end (102) of a communication link (106) comprising a number of communication lanes (108A-108N) greater or equal to two, the communication interface (110) comprising a logic (114) configured to cooperate with another communication interface (112) at a second end (104) of the communication link (106) to send data to the second end over one awake communication lane amongst the said communication lanes, at least one asleep communication lane amongst the said communication lanes being in a sleep mode in which it cannot send any data, the logic (114) being further configured to:
store a communication lane status for the said awake communication lane; and
when detecting that the communication lane status for the said awake communication lane has changed to a first determined status:
- stop sending data over the awake communication lane;
- change the asleep communication lane into a new awake communication lane
- inform the communication interface (112) at the second end (104) that the new awake communication lane will be used to send data,
- send data to the second end (104) over the new awake communication lane;
**characterized in that** the logic (114) is further configured to split a data frame (212) into a number of subframes corresponding to the number of awake communication lanes, the data to be transmitted over the awake communication lanes being one of said number of subframes.

2. The communication interface (110) according to claim 1, further comprising, for each given communication lane amongst all the awake communication lanes and all the asleep communication lanes, a buffer configured to receive data to be transmitted, over the given communication lane, to a corresponding buffer in the other communication interface (112) at the second end (104), and a gate configured to open or close the input in the buffer of data to be transmitted over the given communication lane, to the corresponding buffer in the other communication interface (112) at the second end (104), the logic (114) being configured to control the gate depending on the communication lane status of the given communication lane.

3. The communication interface (110) according to claim 2, wherein the buffer is configured to receive data transmitted over the given communication lane from the corresponding buffer in the other communication interface (112) at the second end (104), and the gate is configured to open or close the output of data received over the given communication lane, the logic (114) being configured to control the gate depending on the communication lane status of the given communication lane.

4. The communication interface (110) according to any of claims 1 to 3, the logic (114) being further configured, when detecting that the communication lane status for the said awake communication lane has changed to a second determined status, to:
- change the asleep communication lane into a new awake communication lane,
- inform the other communication interface (112) at the second end (104) that the new awake communication lane will be used to send data,
- send data to the second end (104) over the awake communication lane and over the new awake communication lane.

5. A communication network (100) comprising a first node (102A) at a first end (102) of a communication link (106) and second node (104A) at a second end (104) of the communication link (106), said communication link (106) comprising a number of communication lanes (108A-108N) greater or equal to two, the first node (102A) and the second node (104A) each comprising the communication interface (110) according to any of claims 1 to 4.

6. The communication network (100) according to claim 5, said communication network (100) being an in-vehicle communication network.

7. A method (400) of communication over a communication link (106) comprising a number of communication lanes (108A-108N) greater or equal to two and having a first end (102) and a second end (104), the method (400) comprising sending data from the first end (102) to second end (104) over one awake communication lane amongst the said communication lanes, at least one asleep communication lane amongst the said communication lanes being in a sleep mode in which it cannot send any data, the method (400) further comprising:
storing, at the first end (102), a communication lane status for the said awake communication lane; and
detecting, at the first end (102), that the communication lane status for the said awake communication lane has changed to a first determined status, and when detecting, at the first end, that the communication lane status for the said awake communication lane has changed to the determined status:
- stopping sending data over the awake communication lane;
- changing the asleep communication lane into a new awake communication lane
- informing the other communication interface (112) at the second end (104) that the new awake communication lane will be used to send data,
- sending data to the second end (104) over the new awake communication lane;
the method **characterized by** comprising splitting, at the first end (102), a data frame into a number of subframes corresponding to the number of awake communication lanes, the data to be transmitted over the awake communication lanes being one of said subframes.

8. The method (400) according to claim 7, further comprising, for each given communication lane amongst all the awake communication lanes and all the asleep communication lanes, inputting, in a buffer at the first end (102), data to be transmitted, over the given communication lane, to a corresponding buffer at the second end (104), and controlling a gate at the first end to open or close the input in the buffer of data to be transmitted over the given communication lane, to the corresponding buffer at the second end (104), depending on the communication lane status of the given communication lane.

9. The method (400) according to claim 8, further comprising receiving in the buffer at the first end (102), data transmitted over the given communication lane from the corresponding buffer at the second end (104), and controlling the gate at the first end (102) to open or close the output of data received over the given communication lane, depending on the communication lane status of the given communication lane.

10. The method (400) according to any of claims 7 to 9, further comprising detecting, at the first end (102), that the communication lane status for the said awake communication lane has changed to a second determined status, and when detecting, at the first end (102), that the communication lane status for the said awake communication lane has changed to the second determined status:
- changing the asleep communication lane into a new awake communication lane,
- informing the other communication interface (112) at the second end (104) that the new awake communication lane will be used to send data,
- sending data to the second end (104) over the awake communication lane and over the new awake communication lane.

11. A computer program product comprising program code for performing the method (400) according to any of claims 7 to 10, when executed by a processor in a computer system.

## Patentansprüche

1. Kommunikationsschnittstelle (110) zur Verwendung an einem ersten Ende (102) einer Kommunikationsverbindung (106), die eine Anzahl von Kommunikationsspuren (108A-108N) größer oder gleich zwei umfasst, wobei die Kommunikationsschnittstelle (110) eine Logik (114) umfasst, die dafür konfiguriert ist, mit einer weiteren Kommunikationsschnittstelle (112) an einem zweiten Ende (104) der Kommunikationsverbindung (106) zusammenzuarbeiten, um über eine aktive Kommunikationsspur unter den Kommunikationsspuren Daten an das zweite Ende zu senden, wobei sich mindestens eine ruhende Kommunikationsspur unter den Kommunikationsspuren in einem Ruhemodus befindet, in dem sie keine Daten senden kann, wobei die Logik (114) ferner für Folgendes konfiguriert ist:
Speichern eines Kommunikationsspurstatus für die aktive Kommunikationsspur, und
wenn erkannt wird, dass sich der Kommunikationsspurstatus für die aktive Kommunikationsspur zu einem ersten bestimmten Status geändert hat:
- Stoppen des Sendens von Daten über die aktive Kommunikationsspur,
- Ändern der ruhenden Kommunikationsspur in eine neue aktive Kommunikationsspur,
- Informieren der Kommunikationsschnittstelle (112) am zweiten Ende (104), dass die neue aktive Kommunikationsspur zum Senden von Daten verwendet wird,
- Senden von Daten an das zweite Ende (104) über die neue aktive Kommunikationsspur,
**dadurch gekennzeichnet, dass** die Logik (114) ferner dafür konfiguriert ist, einen Daten-Frame (212) in eine Anzahl von Subframes zu teilen, welche der Anzahl der aktiven Kommunikationsspuren entspricht, wobei es sich bei den Daten, die über die aktiven Kommunikationsspuren zu übertragen sind, um einen der Anzahl der Subframes handelt.

2. Kommunikationsschnittstelle (110) nach Anspruch 1, ferner für jede gegebene Kommunikationsspur unter allen aktiven Kommunikationsspuren und allen ruhenden Kommunikationsspuren einen Puffer umfassend, der dafür konfiguriert ist, Daten zu empfangen, die über die gegebene Kommunikationsspur an einen entsprechenden Puffer in der anderen Kommunikationsschnittstelle (112) am zweiten Ende (104) zu übertragen sind, und ein Gate, das dafür konfiguriert ist, den Eingang zum Puffer für die Daten zu öffnen oder zu schließen, die über die gegebene Kommunikationsspur an den entsprechenden Puffer in der anderen Kommunikationsschnittstelle (112) am zweiten Ende (104) zu übertragen sind, wobei die Logik (114) dafür konfiguriert ist, das Gate abhängig vom Kommunikationsspurstatus der gegebenen Kommunikationsspur zu steuern.

3. Kommunikationsschnittstelle (110) nach Anspruch 2, wobei der Puffer dafür konfiguriert ist, Daten zu empfangen, die über die gegebene Kommunikationsspur von dem entsprechenden Puffer in der anderen Kommunikationsschnittstelle (1102) am zweiten Ende (104) übertragen werden, und das Gate dafür konfiguriert ist, den Ausgang der Daten zu öffnen oder zu schließen die über die gegebene Kommunikationsspur empfangen werden, wobei die Logik (114) dafür konfiguriert ist, das Gate abhängig vom Kommunikationsspurstatus der gegebenen Kommunikationsspur zu steuern.

4. Kommunikationsschnittstelle (110) nach einem der Ansprüche 1 bis 3, wobei die Logik (114) ferner dafür konfiguriert ist, Folgendes zu tun, wenn erkannt wird, dass sich der Kommunikationsspurstatus für die aktive Kommunikationsspur zu einem zweiten bestimmten Status geändert hat:
- Ändern der ruhenden Kommunikationsspur in eine neue aktive Kommunikationsspur,
- Informieren der anderen Kommunikationsschnittstelle (112) am zweiten Ende (104), dass die neue aktive Kommunikationsspur zum Senden von Daten verwendet wird,
- Senden von Daten an das zweite Ende (104) über die aktive Kommunikationsspur und über die neue aktive Kommunikationsspur.

5. Kommunikationsnetz (100), einen ersten Knoten (102A) an einem ersten Ende (102) einer Kommunikationsverbindung (106) und einen zweiten Knoten (104A) an einem zweiten Ende (104) der Kommunikationsverbindung (106) umfassend, wobei die Kommunikationsverbindung (106) eine Anzahl von Kommunikationsspuren (108A-108N) größer oder gleich zwei umfasst, wobei der erste Knoten (102A) und der zweite Knoten (104A) jeweils die Kommunikationsschnittstelle (110) nach einem der Ansprüche 1 bis 4 umfassen.

6. Kommunikationsnetz (100) nach Anspruch 5, wobei das Kommunikationsnetz (100) ein fahrzeuginternes Kommunikationsnetz ist.

7. Verfahren (400) zum Kommunizieren über eine Kommunikationsverbindung (106), die eine Anzahl von Kommunikationsspuren (108A-108N) größer oder gleich zwei umfasst und ein erstes Ende (102) und ein zweites Ende (104) aufweist, wobei das Verfahren (400) das Senden von Daten von dem ersten Ende (102) über eine aktive Kommunikationsspur unter den Kommunikationsspuren an das zweite Ende (104) umfasst, wobei sich mindestens eine ruhende Kommunikationsspur unter den Kommunikationsspuren in einem Ruhemodus befindet, in dem sie keine Daten senden kann, wobei das Verfahren (400) ferner Folgendes umfasst:
Speichern eines Kommunikationsspurstatus für die aktive Kommunikationsspur an dem ersten Ende (102) und
Erkennen an dem ersten Ende (102), dass sich der Kommunikationsspurstatus für die aktive Kommunikationsspur zu einem ersten bestimmten Status geändert hat, und wenn am ersten Ende erkannt wird, dass sich der Kommunikationsspurstatus für die aktive Kommunikationsspur zu dem bestimmten Status geändert hat:
- Stoppen des Sendens von Daten über die aktive Kommunikationsspur,
- Ändern der ruhenden Kommunikationsspur in eine neue aktive Kommunikationsspur,
- Informieren der anderen Kommunikationsschnittstelle (112) am zweiten Ende (104), dass die neue aktive Kommunikationsspur zum Senden von Daten verwendet wird,
- Senden von Daten an das zweite Ende (104) über die neue aktive Kommunikationsspur,
wobei das Verfahren **dadurch gekennzeichnet ist, dass** es Folgendes umfasst:
Teilen eines Daten-Frames in eine Anzahl von Subframes, welche der Anzahl der aktiven Kommunikationsspuren entspricht, am ersten Ende (102), wobei es sich bei den Daten, die über die aktiven Kommunikationsspuren zu übertragen sind, um einen der Subframes handelt.

8. Verfahren (400) nach Anspruch 7, ferner für jede gegebene Kommunikationsspur unter allen aktiven Kommunikationsspuren und allen ruhenden Kommunikationsspuren das Eingeben von Daten, die über die gegebene Kommunikationsspur an einen entsprechenden Puffer am zweiten Ende (104) zu übertragen sind, in einen Puffer am ersten Ende (102) und das Steuern eines Gates am ersten Ende, den Eingang zum Puffer für die Daten zu öffnen oder zu schließen, die über die gegebene Kommunikationsspur an den entsprechenden Puffer am zweiten Ende (104) zu übertragen sind, abhängig vom Kommunikationsspurstatus der gegebenen Kommunikationsspur, umfassend.

9. Verfahren (400) nach Anspruch 8, ferner das Empfangen von Daten in dem Puffer am ersten Ende (102), die über die gegebene Kommunikationsspur von dem entsprechenden Puffer am zweiten Ende (104) übertragen wurden, und das Steuern des Gates am ersten Ende (102), den Ausgang der Daten zu öffnen oder zu schließen, die über die gegebene Kommunikationsspur empfangen werden, abhängig vom Kommunikationsspurstatus der gegebenen Kommunikationsspur, umfassend.

10. Verfahren (400) nach einem der Ansprüche 7 bis 9, ferner umfassend das Erkennen am ersten Ende (102), dass sich der Kommunikationsspurstatus für die aktive Kommunikationsspur zu einem zweiten bestimmten Status geändert hat, und wenn am ersten Ende (102) erkannt wird, dass sich der Kommunikationsspurstatus für die aktive Kommunikationsspur zu dem zweiten bestimmten Status geändert hat:
- Ändern der ruhenden Kommunikationsspur in eine neue aktive Kommunikationsspur,
- Informieren der anderen Kommunikationsschnittstelle (112) am zweiten Ende (104), dass die neue aktive Kommunikationsspur zum Senden von Daten verwendet wird,
- Senden von Daten an das zweite Ende (104) über die aktive Kommunikationsspur und über die neue aktive Kommunikationsspur.

11. Computerprogrammprodukt, Programmcode zum Durchführen des Verfahrens (400) nach einem der Ansprüche 7 bis 10 umfassend, wenn er durch einen Prozessor in einem Rechensystem ausgeführt wird.

## Revendications

1. Interface de communication (110) destinée à être utilisée au niveau d'une première extrémité (102) d'une liaison de communication (106) comprenant un nombre de voies de communication (108A-108N) supérieur ou égal à deux, l'interface de communication (110) comprenant une logique (114) configurée pour coopérer avec une autre interface de communication (112) située au niveau d'une deuxième extrémité (104) de la liaison de communication (106) pour envoyer des données à la deuxième extrémité sur une voie de communication activée parmi lesdites voies de communication, au moins une voie de communication en sommeil parmi lesdites voies de communication étant dans un mode de sommeil dans lequel elle ne peut pas envoyer de données, la logique (114) étant également configurée pour :
stocker un état de voie de communication concernant ladite voie de communication activée ; et
lorsqu'il est détecté que l'état de voie de communication concernant ladite voie de communication activée est devenu un premier état déterminé :
- cesser d'envoyer des données sur la voie de communication activée ;
- changer la voie de communication en sommeil en une nouvelle voie de communication activée ;
- informer l'interface de communication (112) située au niveau de la deuxième extrémité (104) que la nouvelle voie de communication activée va être utilisée pour envoyer des données ;
- envoyer les données à la deuxième extrémité (104) sur la nouvelle voie de communication activée ;
**caractérisée en ce que** la logique (114) est également configurée pour scinder une trame de données (212) en un nombre de sous-trames correspondant au nombre de voies de communication activées, les données à transmettre sur les voies de communication activées consistant en une sous-trame dudit nombre de sous-trames.

2. Interface de communication (110) selon la revendication 1, comprenant également, pour chaque voie de communication donnée parmi toutes les voies de communication activées et toutes les voies de communication en sommeil, un tampon configuré pour recevoir des données à transmettre, sur la voie de communication donnée, à un tampon correspondant dans l'autre interface de communication (112) située au niveau de la deuxième extrémité (104), et une porte configurée pour ouvrir ou fermer l'entrée dans le tampon de données à transmettre, sur la voie de communication donnée, au tampon correspondant dans l'autre interface de communication (112) située au niveau de la deuxième extrémité (104), la logique (114) étant configurée pour commander la porte en fonction de l'état de voie de communication de la voie de communication donnée.

3. Interface de communication (110) selon la revendication 2, dans laquelle le tampon est configuré pour recevoir des données transmises sur la voie de communication donnée en provenance du tampon correspondant dans l'autre interface de communication (112) située au niveau de la deuxième extrémité (104), et la porte est configurée pour ouvrir ou fermer la sortie des données reçues sur la voie de communication donnée, la logique (114) étant configurée pour commander la porte en fonction de l'état de voie de communication de la voie de communication donnée.

4. Interface de communication (110) selon l'une quelconque des revendications 1 à 3, la logique (114) étant également configurée, lorsqu'il est détecté que l'état de voie de communication concernant ladite voie de communication activée est devenu un deuxième état déterminé, pour :
- changer la voie de communication en sommeil en une nouvelle voie de communication activée ;
- informer l'autre interface de communication (112) située au niveau de la deuxième extrémité (104) que la nouvelle voie de communication activée va être utilisée pour envoyer des données,
- envoyer les données à la deuxième extrémité (104) sur la voie de communication activée et sur la nouvelle voie de communication activée.

5. Réseau de communication (100) comprenant un premier nœud (102A) au niveau d'une première extrémité (102) d'une liaison de communication (106) et un deuxième nœud (104A) au niveau d'une deuxième extrémité (104) de la liaison de communication (106), ladite liaison de communication (106) comprenant un nombre de voies de communication (108A-108N) supérieur ou égal à deux, le premier nœud (102A) et le deuxième nœud (104A) comprenant chacun l'interface de communication (110) selon l'une quelconque des revendications 1 à 4.

6. Réseau de communication (100) selon la revendication 5, ledit réseau de communication (100) étant un réseau de communication embarqué.

7. Procédé (400) de communication sur une liaison de communication (106) comprenant un nombre de voies de communication (108A-108N) supérieur ou égal à deux et possédant une première extrémité (102) et une deuxième extrémité (104), le procédé (400) comprenant l'envoi de données de la première extrémité (102) à la deuxième extrémité (104) sur une voie de communication activée parmi lesdites voies de communication, au moins une voie de communication en sommeil parmi lesdites voies de communication étant dans un mode de sommeil dans lequel elle ne peut pas envoyer de données, le procédé (400) comprenant également les étapes consistant à :
stocker, au niveau de la première extrémité (102), un état de voie de communication concernant ladite voie de communication activée ; et
détecter, au niveau de la première extrémité (102), que l'état de voie de communication concernant ladite voie de communication activée est devenu un premier état déterminé, et lorsqu'il est détecté, au niveau de la première extrémité, que l'état de voie de communication concernant ladite voie de communication activée est devenu l'état déterminé :
- cesser d'envoyer des données sur la voie de communication activée ;
- changer la voie de communication en sommeil en une nouvelle voie de communication activée ;
- informer l'autre interface de communication (112) située au niveau de la deuxième extrémité (104) que la nouvelle voie de communication activée va être utilisée pour envoyer des données ;
- envoyer les données à la deuxième extrémité (104) sur la nouvelle voie de communication activée ;
le procédé étant **caractérisé en ce qu'**il comprend l'étape consistant à scinder, au niveau de la première extrémité (102), une trame de données en un nombre de sous-trames correspondant au nombre de voies de communication activées, les données à transmettre sur les voies de communication activées consistant en une desdites sous-trames.

8. Procédé (400) selon la revendication 7, comprenant également, pour chaque voie de communication donnée parmi toutes les voies de communication activées et toutes les voies de communication en sommeil, l'étape consistant à entrer, dans un tampon au niveau de la première extrémité (104), des données à transmettre, sur la voie de communication donnée, à un tampon correspondant au niveau de la deuxième extrémité (104), et commander une porte au niveau de la première extrémité pour lui faire ouvrir ou fermer l'entrée dans le tampon de données à transmettre, sur la voie de communication donnée, au tampon correspondant au niveau de la deuxième extrémité (104), en fonction de l'état de voie de communication de la voie de communication donnée.

9. Procédé (400) selon la revendication 8, comprenant également la réception, dans le tampon au niveau de la première extrémité (102), de données transmises sur la voie de communication donnée en provenance du tampon correspondant au niveau de la deuxième extrémité (104), et la commande de la porte au niveau de la première extrémité (102) pour lui faire ouvrir ou fermer la sortie des données reçues sur la voie de communication donnée, en fonction de l'état de voie de communication de la voie de communication donnée.

10. Procédé (400) selon l'une quelconque des revendications 7 à 9, comprenant également l'étape consistant à détecter, au niveau de la première extrémité (102), que l'état de voie de communication concernant ladite voie de communication activée est devenu un deuxième état déterminé, et lorsqu'il est détecté, au niveau de la première extrémité (102), que l'état de voie de communication concernant ladite voie de communication activée est devenu le deuxième état déterminé, les étapes consistant à :
- changer la voie de communication en sommeil en une nouvelle voie de communication activée ;
- informer l'autre interface de communication (112) située au niveau de la deuxième extrémité (104) que la nouvelle voie de communication activée va être utilisée pour envoyer des données ;
- envoyer les données à la deuxième extrémité (104) sur la voie de communication activée et sur la nouvelle voie de communication activée.

11. Produit-programme informatique comprenant un code de programme permettant de réaliser le procédé (400) selon l'une quelconque des revendications 7 à 10 lorsqu'il est exécuté par un processeur dans un système informatique.
